# FASCICULE DE BREVET EUROPEEN

(11) **EP 1 310 717 B1**
(45) Date de publication et mention de la délivrance du brevet: **03.01.2007**
(21) Numéro de dépôt: 02292819.6
(22) Date de dépôt: 13.11.2002
(51) Int. Cl.: F16L 3/233

(54) **Collier de serrage**
Spannband
Clamping band

(30) Priorité: 13.11.2001 FR 0114642
(43) Date de publication de la demande: 14.05.2003
(73) Titulaire: LEGRAND FRANCE, 87000 Limoges (FR); LEGRAND SNC, 87000 Limoges (FR)
(72) Inventeur: Barriuso, Jean-Pierre, 76750 Bosc Roger sur Buchy (FR); Cornu, Hervé, 76770 Houppeville (FR)
(74) Mandataire: Santarelli

(56) Documents cités:
- EP-A- 1 103 750
- DE-A- 3 205 045
- US-A- 3 875 620

## Description

L'invention a trait aux colliers de serrage.

Elle concerne un collier de serrage comportant une lanière présentant deux segments d'extrémités raccordés par une portion intermédiaire extensible pourvue d'une succession de ponts frangibles raccordant chacun une première partie de ladite portion à une deuxième partie de ladite portion.

Le brevet américain n° US-3,875,620 illustre l'application d'un tel collier de serrage au maintien des branches d'un arbre ou d'un arbuste à un tuteur.

Ce collier se détend progressivement au cours de la croissance de la branche, par rupture successive des ponts frangibles.

De tels colliers de serrage trouvent bien d'autres applications, notamment pour maintenir ensemble des câbles électriques, ou des câbles optiques, par exemple du type voix, données, images (VDI).

Compte tenu de leurs nombreuses applications dans la transmission des données, les câbles du type VDI sont de plus en plus répandus.

Ils ont toutefois pour inconvénient majeur leur fragilité, et une trop forte compression lors du serrage du collier a tendance à les endommager.

En effet, l'utilisateur n'a pas la possibilité d'apprécier la force de traction qu'il doit exercer sur le collier pour maintenir ensemble les câbles sans toutefois les endommager, de sorte qu'en général, il serre trop fort le collier en supposant que son extensibilité suffira à absorber cette surcharge.

En réalité, il n'en est rien car, bien qu'extensible, le collier doit présenter une rigidité suffisante pour assurer un maintien suffisant des câbles afin qu'ils ne s'entrechoquent pas.

La force de traction exercée sur la lanière est d'autant plus difficile à évaluer que, le plus souvent, la mise en place du collier est effectuée à l'aide d'une pince spécialement prévue à cet effet.

L'invention vise à résoudre notamment les inconvénients précités en proposant un collier de serrage présentant certaines propriétés d'extensibilité, et dont la pose autour de pièces fragiles tels que des câbles VDI puisse être réalisée à la fois aisément et sans risque d'endommagement de ces derniers.

A cet effet, l'invention propose un collier de serrage du type précité, dont deux ponts frangibles au moins présentent des sections différentes.

Lors du serrage du collier, plusieurs situations peuvent se produire : soit aucun des ponts ne rompt, soit l'un seul d'entre eux rompt, soit les deux rompent.

Chacune de ces situations permet d'évaluer la force de traction exercée sur la lanière lors de la mise en place du collier et tendant à éloigner les deux segments de la lanière.

Ainsi, les ponts frangibles de sections différentes forment ensemble une jauge de contrainte permettant à l'utilisateur de maintenir au moyen du collier les pièces à enserrer de manière suffisamment rigide et stable, tout en évitant une compression trop forte susceptible de les endommager.

Divers modes de réalisation correspondent à l'invention.

Ainsi, la portion intermédiaire comprend par exemple une succession de maillons extensibles reliés deux à deux.

Suivant un mode de réalisation, chaque maillon présente une ouverture centrale dans laquelle s'étend longitudinalement au moins un pont frangible.

Ce pont est apte à rester intact pour maintenir constante la dimension longitudinale de l'ouverture lorsqu'une force de traction exercée sur la lanière et tendant à éloigner ses segments est inférieure à une valeur seuil prédéterminée.

Par contre, lorsque la force de traction exercée sur la lanière est supérieure à cette valeur seuil, le pont rompt et permet la dilatation longitudinale du maillon correspondant.

Un seul pont frangible peut s'étendre dans chaque ouverture centrale, mais, en variante, plusieurs ponts frangibles de sections égales peuvent s'y étendre longitudinalement.

Les ponts frangibles sont par exemple cylindriques à section circulaire.

Suivant un mode de réalisation particulier, les ponts frangibles successifs présentent des sections croissantes de l'un vers l'autre des segments.

Le collier de serrage comportant par exemple une tête ou boucle jouxtant le premier segment d'extrémité et avec laquelle est apte à coopérer le deuxième segment d'extrémité pour la fermeture du collier, les sections des ponts frangibles sont croissantes depuis le deuxième segment d'extrémité vers le premier.

Ainsi, la portion extensible comporte par exemple plusieurs séries successives formées chacune d'au moins deux ponts frangibles adjacents de sections égales, les sections des ponts frangibles étant par ailleurs différentes d'une série à l'autre.

Chaque série est notamment formée de trois ponts frangibles de sections égales.

Il est par exemple prévu une première, une deuxième et une troisième séries successives de ponts frangibles dont les sections, circulaires, sont respectivement d'un diamètre de 0,6 mm, 0,8 mm, et 1 mm.

En variante, les ponts frangibles successifs sont de sections strictement croissantes de l'un vers l'autre des segments, de sorte qu'en fonction du nombre de ponts rompus, il est possible d'obtenir une évaluation assez précise de la force de traction exercée sur la lanière au cours du serrage du collier.

D'autres caractéristiques et avantages de l'invention apparaîtront à la lumière de la description qui va suivre d'un mode de réalisation donné à titre d'exemple non limitatif, description faite en référence aux dessins annexés dans lesquels :
- la figure 1 est une vue en plan de dessus d'un collier de serrage conforme à l'invention, présenté à plat ;
- la figure 2 est une vue en coupe du collier de la figure 1, suivant le plan de coupe matérialisé sur cette figure par la ligne II-II ;
- la figure 3 est une vue en coupe du collier de serrage de la figure 1, suivant un plan de coupe matérialisé sur cette figure par la ligne III-III ;
- la figure 4 est une vue en perspective du collier de la figure 1, présenté à plat ;
- la figure 5 est une vue de détail en perspective représentant un maillon unique du collier de serrage des figures précédentes ;
- la figure 6 est une vue en coupe en perspective du maillon de la figure 5, suivant le plan de coupe VI-VI ;
- la figure 7 est une vue en perspective d'un collier conforme à l'invention représenté fermé, enserrant une pluralité de câbles, représentés pour leur part en traits mixtes ;
- la figure 8 est une vue de dessus de détail illustrant la portion extensible d'un collier conforme à l'invention, suivant une variante de réalisation.

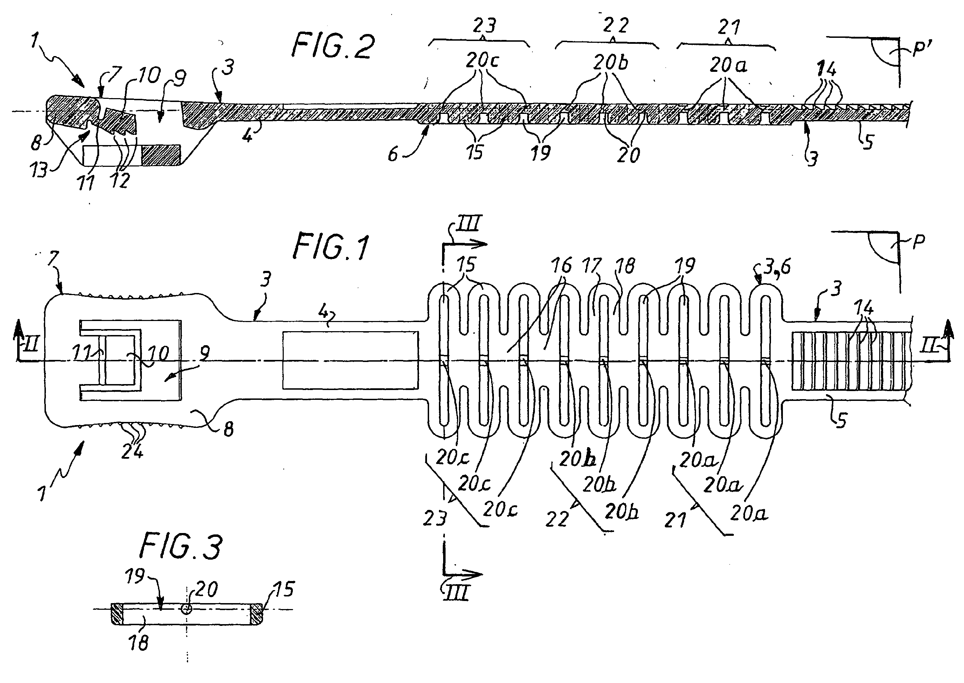

Sur la figure 1 est représenté un collier de serrage 1 propre à enserrer une pluralité de pièces allongées 2 pour les maintenir ensemble.

En l'occurrence, ces pièces 2 sont des câbles électriques ou optiques, notamment des câbles de type VDI, particulièrement fragiles.

Le collier 1 est monobloc, et l'ensemble de ses constituants, qui seront décrits dans ce qui va suivre, sont venus de matière, c'est-à-dire de moulage puisque le collier 1 est ici formé par moulage d'une matière synthétique, de préférence un polyamide.

Le collier 1 comporte une lanière 3 qui, au repos (c'est-à-dire en l'absence de contrainte), est rectiligne et définit ainsi une direction longitudinale.

Cette lanière 3 comporte un premier segment d'extrémité 4 et un deuxième segment d'extrémité 5 raccordés par une portion intermédiaire 6 extensible.

Le collier 1 comporte en outre, au bout de la lanière 3, de l'autre côté du premier segment 4 par rapport à la portion intermédiaire 6, une tête ou boucle de fermeture 7 dont la fonction apparaîtra dans ce qui va suivre.

Ainsi, le collier 1 comporte successivement : la boucle 7, le premier segment d'extrémité 4 qui jouxte la boucle, la portion intermédiaire 6 qui jouxte le premier segment d'extrémité 4, et le deuxième segment d'extrémité 5 qui jouxte la portion intermédiaire 6.

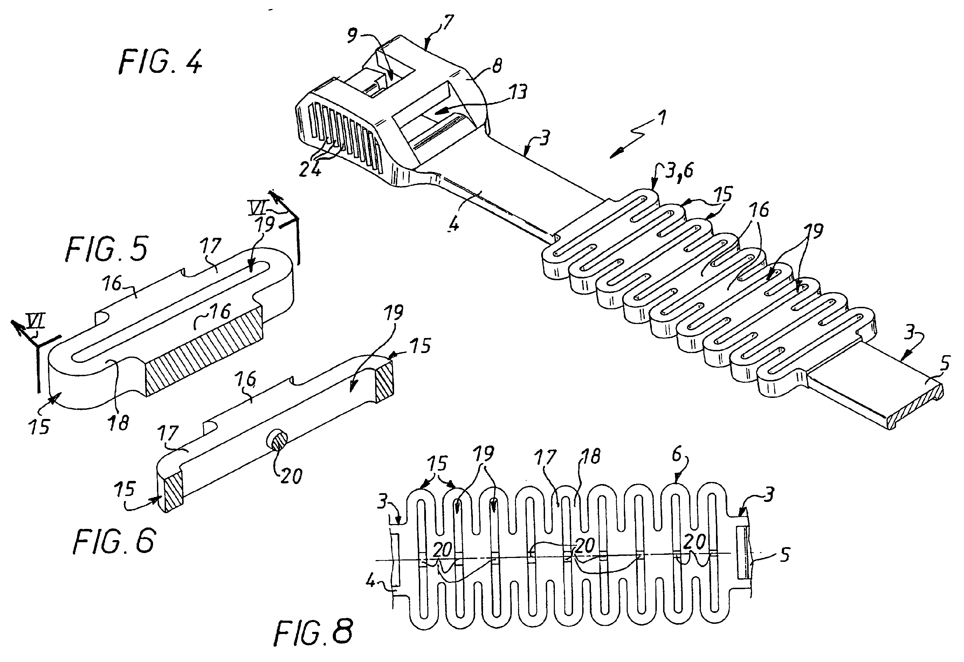

Comme on peut le constater d'après les figures 1 à 4, la lanière 3 est globalement plate, de sorte qu'elle s'étend, au repos, dans un plan P formé sur la figure 1 par le plan de la feuille.

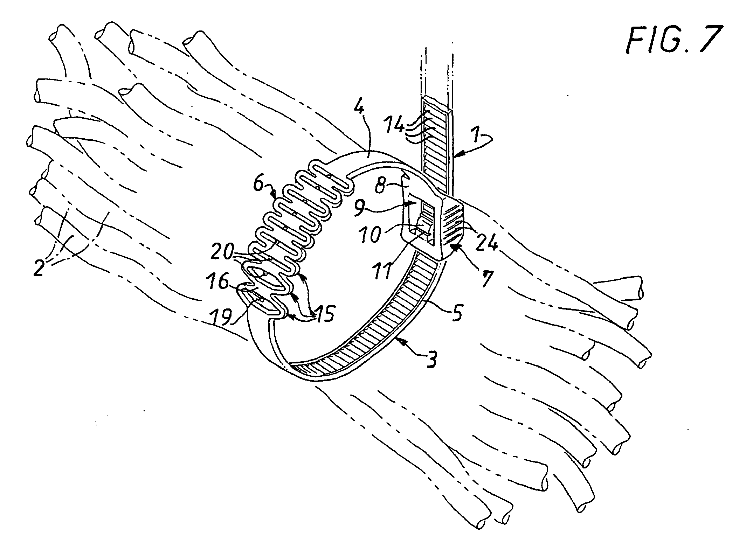

La lanière 3 présente une certaine flexibilité dans un plan longitudinal P' perpendiculaire au plan P défini ci-dessus, de sorte qu'il est possible de la boucler sur elle-même pour fermer le collier 1 en introduisant le deuxième segment d'extrémité 5 dans la boucle 7, telle que représenté sur la figure 7.

Tel qu'il apparaît notamment sur les figures 1 et 2, la boucle 7 comporte un cadre périphérique 8 à profil sensiblement rectangulaire, percé d'une ouverture centrale 9 dans laquelle est étendu un cliquet anti-retour 10 saillant longitudinalement du cadre 8 en direction de la lanière 3 et raccordé à celui-ci par une zone de moindre épaisseur 11 qui forme une articulation permettant le pivotement du cliquet 10 dans l'ouverture 9 parallèlement au plan P'.

Le cliquet 10 est muni de dents d'encliquetage 12 qui, au repos, empiètent sur un passage 13 débouchant qui traverse longitudinalement le cadre 8.

Le deuxième segment d'extrémité 5 comporte quant à lui une succession de crans 14 qui, lorsque le segment 5 est introduit dans le passage 13, viennent en prise avec les dents d'encliquetage 12 qui, sauf à éloigner le cliquet 10 du segment 5, empêchent le retrait de ce dernier de la boucle 7.

De la sorte, la fermeture du collier 1 est irréversible, et, pour le séparer des objets 2 qu'il enserre, il suffira de le sectionner au moyen d'un outil tranchant.

Toutefois, l'extensibilité de la portion intermédiaire 6 permet de compenser cette irréversibilité, et d'éviter toute compression trop importante des objets enserrés, tel qu'on va le démontrer ci-après.

La portion intermédiaire 6 comporte une succession de maillons 15 en forme de boutonnière reliés deux à deux en étant rattachés, en leur milieu, par une languette 16 sensiblement rigide.

Chaque maillon 15 comporte deux parois 17, 18 en regard étendues transversalement et raccordées par leurs extrémités de sorte qu'il est défini entre elles une ouverture centrale 19 de forme oblongue.

Cette ouverture centrale 19 est traversée longitudinalement par un pont frangible 20 qui raccorde les parois 17, 18 et, en l'absence de contrainte, maintient constante la largeur de l'ouverture 19, c'est-à-dire l'écartement entre les parois 17, 18.

Supposons qu'une force de traction soit exercée sur le collier 1, cette force tendant à éloigner l'un de l'autre les segments d'extrémités 4, 5, tel que cela se produit lors du serrage du collier 1 autour d'un ensemble de câbles 2 (figure 7).

Lorsque cette force de traction est inférieure à une valeur seuil prédéterminée qui est fonction de la section transversale du pont frangible 20, celui-ci reste intact, c'est-à-dire d'un seul tenant, et maintient constant l'écart entre les parois 17, 18 du maillon 20 correspondant.

Par contre, lorsque cette force de traction dépasse ladite valeur seuil, le pont 20 rompt, permettant ainsi l'écartement des parois 17, 18 et ainsi la dilatation longitudinale du maillon 15, ce qui permet un certain relâchement du collier 1 autour des câbles 2.

Chaque maillon 20 présentant toutefois une certaine élasticité compte tenu du matériau choisi pour le collier 1, ce dernier exerce toujours une certaine force de compression sur les câbles 2.

Suivant l'invention, deux au moins des ponts frangibles 20 présentent des sections différentes. Par section, on entend ici la superficie de la surface de section transversale du pont 20.

Compte tenu de cette différence de section, il correspond au pont 20 de section la plus faible une première valeur seuil F1 prédéterminée, et au pont 20 de section la plus forte une deuxième valeur seuil F2 également prédéterminée, supérieure à la première F1.

De la sorte, lorsque la force de traction exercée sur le collier 1 ne provoque la rupture d'aucun des ponts 20, cela indique que la valeur, notée F, de cette force, est inférieure à la première valeur seuil F1.

Lorsque cette force de traction provoque la rupture du pont frangible 20 de section la plus faible, sans pour autant entraîner la rupture du pont frangible 20 de section la plus élevée, cela indique que la valeur F de la force de traction est comprise entre les deux valeurs seuils F1 et F2.

Enfin, lorsque la force de traction exercée sur le collier 1 provoque la rupture des ponts frangibles 20 de sections différentes, cela indique que la valeur F de la force exercée est supérieure à la valeur seuil F2 la plus élevée.

Les ponts frangibles 20 de sections différentes forment donc ensemble une jauge de contrainte qui permet d'évaluer la force de traction exercée sur le collier 1, toute compression trop importante des objets 2 à enserrer pouvant être ainsi évitée.

Suivant un mode de réalisation particulier illustré sur les figures, la portion extensible 6 comporte une succession de ponts frangibles 20 dont les sections sont croissantes suivant la direction longitudinale, en l'occurrence depuis le pont 20 le plus proche du deuxième segment d'extrémité 5 vers le pont 20 le plus proche du premier segment d'extrémité 4.

En l'occurrence, cette succession de ponts frangibles 20 est composée d'une première série 21 de trois ponts successifs 20a, située à proximité du deuxième segment d'extrémité 5 et présentant chacun une même section dite section faible, à laquelle correspond une première valeur seuil F1 dite inférieure.

A cette première série 21 de ponts frangibles 20a succède, en direction du premier segment d'extrémité 4, une deuxième série 22 de trois ponts frangibles 20b présentant chacun une même section, dite moyenne, supérieure à la section faible, et à laquelle correspond une valeur seuil F2 dite moyenne, supérieure à la valeur seuil inférieure F1.

A cette deuxième série 22 de ponts frangibles 20b succède, en direction du premier segment d'extrémité 4, une troisième série 23 de ponts frangibles 20c présentant chacun une même section dite forte, supérieure à la section moyenne, et à laquelle correspond une valeur seuil F3 dite supérieure, qui est supérieure à la valeur seuil moyenne F2.

Ainsi, il est possible d'obtenir une évaluation assez précise de la force de traction exercée sur le collier 1 au cours de son serrage, suivant que les ponts 20a, 20b, 20c de chaque série 21, 22, 23 sont intacts ou rompus.

Ainsi, la valeur F de la force de traction est :
- inférieure à la valeur seuil inférieure F1 si l'ensemble des ponts 20a, 20b, 20c sont intacts ;
- comprise entre les valeurs seuils inférieure F1 et moyenne F2 lorsque l'un au moins des ponts 20a de la première série 21 est rompu tandis que ceux 20b, 20c des deuxième et troisième séries 22, 23 sont intacts ; et
- comprise entre les valeurs seuils moyenne F2 et supérieure F3 lorsque l'un au moins des ponts frangibles 20b de la deuxième série 22 est rompu tandis que les ponts 20c de la troisième série 23 sont intacts.

L'utilisateur veillera à ne pas rompre l'ensemble des ponts 20c à section forte, ce qui signifierait que la force de traction exercée sur le collier 1 a dépassé la valeur seuil supérieure F3, sans qu'il soit toutefois possible d'en obtenir une évaluation.

Bien entendu, les dimensions des ponts frangibles 20 sont choisies pour les valeurs seuil F1, F2, F3 qui leur correspondent soient inférieures à la valeur d'une force de traction susceptible d'endommager les objets 2 à enserrer.

Une telle force de traction peut être évaluée par des essais appropriés.

Des tests ont permis de faire des choix satisfaisants pour la réalisation d'un collier de serrage 1 particulièrement destiné à enserrer des câbles du type VDI. Ces choix sont résumés dans le tableau ci-dessous, les ponts frangibles 20 étant choisis cylindriques à section transversale circulaire.

| Matériau du collier | Polyamide PA 12 ou PA 6.6 |
|---|---|
| Diamètre de la section faible | 0,6 mm |
| Diamètre de la section moyenne | 0,8 mm |
| Diamètre de la section forte | 1 mm |

La jauge de contrainte constituée par l'ensemble des ponts frangibles 20 forme ainsi un témoin à la fois visuel, auditif et sensitif permettant de mesurer la force de traction exercée sur le collier 1.

En effet, l'utilisateur peut non seulement voir mais également entendre la rupture des ponts frangibles 20, de même qu'il peut ressentir la secousse engendrée dans le collier 1.

Bien entendu, lorsqu'un pont frangible 20 rompt, le maillon 15 correspondant se dilate longitudinalement, de sorte que le collier 1 se détend, l'élasticité du maillon 15 permettant alors un ajustage automatique du collier 1 autour des pièces 2 enserrées.

Il est possible de monter et de serrer le collier 1 à la main, ces opérations pouvant être facilitées par la forme ergonomique de la boucle 7 et la présence éventuelle sur ses flancs de nervures 24 anti-dérapantes.

Mais le serrage du collier 1 peut également être effectué à l'aide d'une pince (non représentée) spécialement prévue à cet effet. Une pince de type classique, telle que décrite dans la demande de brevet français déposée par la demanderesse et publiée sous le n° FR-2 400 995, convient parfaitement au serrage du collier 1 qui vient d'être décrit.

Diverses variantes peuvent être envisagées pour la réalisation d'un collier 1 conforme à l'invention.

En particulier, l'on peut varier, pour chaque série de ponts frangibles tel que décrit ci-dessus, le nombre de ponts qu'elle comporte. Ainsi, bien que les séries décrites ci-dessus comportent chacune trois ponts frangibles de même section, il est possible de prévoir des séries comportant deux ponts de même section, ou un nombre de ponts supérieur ou égal à quatre.

L'on peut également prévoir que plusieurs ponts frangibles soient disposés dans un même maillon 15, de sorte notamment à augmenter la valeur seuil correspondant au maillon 15 concerné.

Par exemple, ce maillon comporte deux, voire trois ponts frangibles cylindriques parallèles traversant longitudinalement son ouverture centrale, la dilatation du maillon étant permise lorsque les trois ponts ont rompu.

L'on peut également prévoir que les ponts frangibles successifs présentent des sections toutes différentes. Ainsi, suivant un mode de réalisation particulièrement avantageux, illustré sur la figure 8, la section des ponts frangibles est strictement croissante de l'un des segments d'extrémité vers l'autre, de préférence depuis le deuxième segment d'extrémité vers le premier.

Il est ainsi possible d'obtenir, en fonction du nombre de ponts ayant rompu, une approximation assez précise de la valeur de la force de traction exercée sur le collier 1 au cours de son serrage, puisque l'on sait que cette valeur est comprise entre la valeur seuil correspondant au dernier ayant rompu, et la valeur seuil correspondant au pont intact qui lui est immédiatement adjacent.

L'invention ne saurait bien entendu être limitée aux modes de réalisation qui viennent d'être décrits.

## Revendications

1. Collier (1) de serrage comportant une lanière (3) présentant deux segments d'extrémité (4, 5) raccordés par une portion intermédiaire (6) extensible pourvue d'une succession de ponts frangibles (20) raccordant chacun une première partie (17) de ladite portion (6) à une deuxième partie (18) de ladite portion (6), **caractérisé en ce que** deux ponts frangibles (20) au moins présentent des sections différentes.

2. Collier de serrage selon la revendication 1, **caractérisé en ce que** ladite portion intermédiaire (6) comprend une succession de maillons (15) extensibles reliés deux à deux.

3. Collier de serrage selon la revendication 2, **caractérisé en ce que** chaque maillon (15) présente une ouverture centrale (19) dans laquelle s'étend longitudinalement au moins un pont frangible (20), ledit pont (20) étant apte à rester intact pour maintenir constante la dimension longitudinale de ladite ouverture (19) lorsqu'une force de traction exercée sur la lanière (6) et tendant à éloigner ses segments (4, 5) est de valeur inférieure à une valeur seuil prédéterminée.

4. Collier de serrage selon la revendication 3, **caractérisé en ce que** dans chaque ouverture centrale (19) s'étendent longitudinalement plusieurs ponts frangibles de sections égales.

5. Collier de serrage selon l'une des revendications précédentes, **caractérisé en ce que** les ponts frangibles (20) sont cylindriques à section circulaire.

6. Collier de serrage selon l'une des revendications précédentes, **caractérisé en ce** les ponts frangibles successifs (20) présentent des sections croissantes de l'un des segments (5) vers l'autre (4).

7. Collier de serrage selon la revendication 6, **caractérisé en ce qu'**il comporte une tête (7) jouxtant le premier segment d'extrémité (4) et avec laquelle est apte à coopérer le deuxième segment d'extrémité (5) pour la fermeture du collier (1), les sections des ponts frangibles (20) étant croissantes depuis le deuxième segment d'extrémité (5) vers le premier (4).

8. Collier de serrage selon la revendication 6 ou 7, **caractérisé en ce que** ladite portion extensible (6) comporte plusieurs séries (21 ; 22 ; 23) successives formées chacune d'au moins deux ponts frangibles adjacents (20a ; 20b ; 20c) de sections égales, les sections des ponts frangibles (20a ; 20b ; 20c) étant par ailleurs différentes d'une série à l'autre.

9. Collier de serrage selon la revendication 8, **caractérisé en ce que** chaque série (21 ; 22 ; 23) est formée de 3 ponts frangibles (20a ; 20b ; 20c) de sections égales.

10. Collier de serrage selon la revendication 8 ou 9, **caractérisé en ce que** la portion extensible (6) comporte une première (21), une deuxième (22) et une troisième (23) séries successives de ponts frangibles (20a ; 20b ; 20c) dont les sections, circulaires, sont respectivement d'un diamètre de 0,6 mm, 0,8 mm, et 1 mm.

11. Collier de serrage selon l'une des revendications 1 à 7, **caractérisé en ce que** les ponts frangibles (20) successifs sont de sections strictement croissantes de l'un des segments (5) vers l'autre (4).

## Claims

1. Tie (1) including a strap (3) having two end segments (4, 5) connected by an extensible intermediate portion (6) provided with a succession of frangible bridges (20) each connecting a first part (17) of said portion (6) to a second part (18) of said portion (6), **characterised in that** two or more of the frangible bridges (20) have different sections.

2. Tie according to claim 1, **characterised in that** said intermediate portion (6) includes a succession of extensible links (15) connected two by two.

3. Tie according to claim 2, **characterised in that** each link (15) has a central opening in which one or more frangible bridges (20) extend longitudinally, said bridge (20) or each of said bridges (20) being adapted to remain intact to maintain constant the longitudinal dimension of said opening (19) if a traction force exerted on the strap (6) and tending to move its segments (4, 5) away from each other has a value below a predetermined threshold value.

4. Tie according to claim 3, **characterised in that** a plurality of frangible bridges of equal section extend longitudinally in each central opening (19).

5. Tie according to any preceding claim, **characterised in that** the frangible bridges (20) are cylindrical with a circular cross section.

6. Tie according to any preceding claim, **characterised in that** the successive frangible bridges (20) have sections increasing from one of the segments (5) toward the other (4).

7. Tie according to claim 6, **characterised in that** it further includes a head (7) adjoining the first end segment (4) and with which the second end segment (5) is adapted to cooperate to close the tie (1), the sections of the frangible bridges (20) increasing from the second end segment (5) toward the first end segment (4).

8. Tie according to claim 6 or 7, **characterised in that** said extensible portion (6) includes a plurality of successive series (21; 22; 23) each comprising two or more adjacent frangible bridges (20a; 20b; 20c) of equal section, the sections of the frangible bridges (20a; 20b; 20c) differing from one series to another.

9. Tie according to claim 8, **characterised in that** each series (21; 22; 23) comprises three frangible bridges (20a; 20b; 20c) of equal section.

10. Tie according to claim 8 or 9, **characterised in that** the extensible portion (6) includes first (21), second (22) and third (23) successive series of frangible bridges (20a; 20b; 20c) with respective circular sections having a diameter of 0.6 mm, 0.8 mm and 1 mm.

11. Tie according to any of claims 1 to 7,
**characterised in that** the successive frangible bridges (20) have sections increasing from one of the segments (5) toward the other (4).

## Patentansprüche

1. Kabelbinder (1) mit einem Riemen (3), der zwei Endsegmente (4, 5) aufweist, die durch ein dehnbares Zwischenstück (6) verbunden sind, das mit einer Folge zerbrechbarer Brücken (20) versehen ist, die jeweils ein erstes Teil (17) dieses Stücks (6) mit einem zweiten Teil (18) dieses Stücks (6) verbinden,
**dadurch gekennzeichnet, dass** zwei zerbrechbare Brücken (20) wenigstens unterschiedliche Querschnitte aufweisen.

2. Kabelbinder nach Anspruch 1,
**dadurch gekennzeichnet, dass** das Zwischenstück (6) eine Folge von dehnbaren Gliedern (15) aufweist, die paarweise miteinander verbunden sind

3. Kabelbinder nach Anspruch 2,
**dadurch gekennzeichnet, dass** jedes Glied (15) eine mittlere Öffnung (19) aufweist, in der sich wenigstens eine zerbrechbare Brücke (20) in Längsrichtung erstreckt, wobei die Brücke (20) unversehrt zu bleiben vermag, um das Längsmaß der Öffnung (19) konstant zu halten, wenn eine Zugkraft, die auf den Riemen (6) ausgeübt wird und dazu tendiert, dessen Segmente (4, 5) voneinander zu entfernen, kleiner ist als ein vorbestimmter Schwellenwert.

4. Kabelbinder nach Anspruch 3,
**dadurch gekennzeichnet, dass** sich in jeder mittleren Öffnung (19) mehrere zerbrechbare Brücken mit gleichen Querschnitten erstrecken.

5. Kabelbinder nach einem der vorhergehenden Ansprüche
**dadurch gekennzeichnet, dass** die zerbrechbaren Brücken (20) zylindrisch mit kreisförmigem Querschnitt sind.

6. Kabelbinder nach einem der vorhergehenden Ansprüche,
**dadurch gekennzeichnet, dass** die aufeinander folgenden zerbrechbaren Brücken (20) von dem einen Segment (5) zu dem anderen (4) zunehmende Querschnitte aufweisen.

7. Kabelbinder nach Anspruch 6,
**dadurch gekennzeichnet, dass** er einen Kopf (7) umfasst, der an das erste Endsegment (4) angrenzt und mit dem das zweite Endsegment (5) zum Schließen des Kabelbinders (1) zusammenzuwirken vermag, wobei die Querschnitte der zerbrechbaren Brücken (20) von dem zweiten Endsegment (5) zu dem ersten Endsegment (4) zunehmen.

8. Kabelbinder nach Anspruch 6 oder 7,
**dadurch gekennzeichnet, dass** das dehnbare Stück (6) mehrere aufeinander folgende Reihen (21; 22; 23) umfasst, die jeweils von wenigstens zwei benachbarten zerbrechbaren Brücken (20a; 20b; 20c) mit gleichen Querschnitten gebildet sind, wobei die Querschnitte der zerbrechbaren Brücken (20a; 20b; 20c) außerdem von Reihe zu Reihe verschieden sind.

9. Kabelbinder nach Anspruch 8,
**dadurch gekennzeichnet, dass** jede Reihe (21; 22; 23) aus drei zerbrechbaren Brücken (20a; 20b; 20c) mit gleichen Querschnitten gebildet ist.

10. Kabelbinder nach Anspruch 8 oder 9,
**dadurch gekennzeichnet, dass** das dehnbare Stück (6) eine erste (21), eine zweite (22) und eine dritte (23) aufeinander folgende Reihe zerbrechbarer Brücken (20a; 20b; 20c) aufweist, deren kreisförmige Querschnitte einen Durchmesser von 0,6 mm bzw. 0,8 mm bzw. 1 mm haben.

11. Kabelbinder nach einem der Ansprüche 1 bis 7,
**dadurch gekennzeichnet, dass** die aufeinander folgenden zerbrechbaren Brücken (20) von dem einen Segment (5) zu dem anderen (4) genau zunehmende Querschnitte haben.
